Europäisches Patentamt

European Patent Office

Office européen des brevets

(19)

(11) **EP 1 112 963 B1**

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(51) Int Cl.⁷: **C01G 3/05**, B01J 23/72, C07F 7/16

(21) Anmeldenummer: **00121384.2**

(22) Anmeldetag: **12.10.2000**

(54) **Verfahren zur Herstellung von CuCl aus den kupferhaltigen Rückständen der Organochlorsilan-Direktsynthese**

Process for the preparation of CuCl from copper containing residues from the synthesis of organochlor silan

Procédé de préparation de CuCl à partir de résidus contenant du cuivre de la synthèse d'organochlor silane

(84) Benannte Vertragsstaaten:
**DE FR GB**

(30) Priorität: **23.12.1999 DE 19962569**

(43) Veröffentlichungstag der Anmeldung:
**04.07.2001 Patentblatt 2001/27**

(73) Patentinhaber: **Wacker-Chemie GmbH**
**81737 München (DE)**

(72) Erfinder:
• **Kalchauer, Wilfried, Dr.**
 **84489 Burghausen (DE)**
• **Straussberger, Herbert**
 **84561 Mehring/Öd (DE)**
• **Streckel, Willibald**
 **84561 Mehring/Öd (DE)**

• **Goetze, Ulrich, Dr.**
 **84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
• **DATABASE WPI Section Ch, Week 198718 Derwent Publications Ltd., London, GB; Class E32, AN 1987-127386 XP002155870 & SU 1 255 576 A (TBILISI UNIV), 7. September 1986 (1986-09-07)**
• **"gmelins handbuch der anorganischen chemie", VERLAG CHEMIE , 1958 XP002155869 * Seite 205 * * Seite 207 ***

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Verfahren zur Herstellung von CuCl aus den kupferhaltigen Rückständen der Organochlorsilan-Direktsynthese.

Bei der Direktsynthese von Organochlorsilanen, insbesondere Methylchlorsilanen wird metallisches Silicium mit Chlormethan in Gegenwart von Kupferkatalysatoren und gegebenfalls von weiteren Co-Katalysatoren und Promotoren umgesetzt. Bei der industriellen Durchführung der Direktsynthese in Wirbelschichtreaktoren werden zusammen mit dem Reaktionsprodukt, dem Rohsilan, und unumgesetzten Chlormethan auch Feinanteile von Silicium und Kupferkatalysator, verunreinigt mit Kohlenstoffpartikeln und verschiedenen Metallverbindungen aus den Nebenbestandteilen des technischen Silicium-Rohstoffes, ausgetragen und in nachgeschalteten Trennaggregaten, z.B. Cyclonen, abgetrennt. Weiterhin fällt ein Reaktorrückstand aus Silicium, Katalysator und Metallhalogeniden an, der kontinuierlich oder diskontinuierlich aus den Wirbelschichtreaktoren ausgetragen wird. Auch Trocknungs- und Filtrationsprozesse führen zum Anfall verunreinigter Feinstäube.

Verfahren zur Rückgewinnung des Kupfers aus Reaktorrückstand und Feinstäuben sind bekannt. Beispielsweise ist aus US-A-5,306,328 bekannt, den Kupferanteils aus Rückständen der Methylchlorsilan-Synthese in lösliche Kupfer(II)salze zu überführen und die Kupfer(II)salze mit Eisenpulver zu Kupfermetall zu reduzieren. Der Nachteil dieses Verfahrens ist, daß Eisen und Kupfer mindestend im molaren Verhältnis von 1:1 eingesetzt werden müssen, und daß, wenn das Kupfer nicht in metallischer Form als Katalysator eingesetzt wird, eine entsprechende Weiterverarbeitung erforderlich ist.

Gegenüber Cu-Oxiden und Kupfer-Metall-Katalysatoren hat der CuCl-Katalysator bei der Direktsynthese den Vorteil, daß zu Beginn die Reaktion schneller anspringt, daß bei vergleichbarer Reaktivität eine geringere Katalysatormenge benötigt wird, und daß bei vergleichbarer Cu-Katalysatormenge, bezogen auf metallisches Kupfer, die Reaktivität höher ist.

Verfahren zur Herstellung von CuCl aus wässrigen Lösungen sind bekannt. Dabei werden zuerst reine Cu-(II)-Verbindungen oder sogenanntes metallisches Abfallkupfer in Mineralsäuren wie z.B. Salzsäure aufgelöst, es kommen aber auch salzsaure $CuCl_2$-Lösungen zu Einsatz, die bei den Ätzvorgängen für die Leiterplattenherstellung anfallen.

Derartige Lösungen sind im Vergleich zu jenen Lösungen, die bei der wässrigen Aufarbeitung der Prozessrückstände aus der Direktsynthese anfallen, relativ arm an zusätzlichen Verunreinigungen, wie z.B. Metallchloriden. Die kupferhaltigen Lösungen werden nach dem Filtrieren mit Hilfe eines geeigneten Reduktionsmittels, wie z.B. Cu, Fe, Zn, Al, Hydroxylamin, schwefelige Säure, $SO_2$ zu Cu-(I)-Verbindungen reduziert, wobei darauf geachtet wird, daß das gebildete CuCl durch Zugabe von Komplexbildnern, wie z.B. NaCl und/oder Salzsäure, vollständig in gelöster Form vorliegt. Nach einer neuerlichen Filtration wird anschließend durch eine geeignete Maßnahme das Löslichkeitsprodukt von CuCl unterschritten, sodaß das feste CuCl zumindest teilweise ausfällt. Dies kann beispielsweise dadurch erreicht werden, daß die Lösung stark mit Wasser verdünnt wird. Das feste CuCl wird abfiltriert, gewaschen und getrocknet.

Diese Verfahren sind beispielsweise beschrieben in Ullmann' s Encyclopedia of Industrial Chemistry, Band A7, Seite 574.

Die Nachteile bei diesen Verfahren sind, daß durch das starke Verdünnen relativ viel Reaktionsvolumen und Wasser benötigt wird und die anfallende Filtrate aufgearbeitet oder entsorgt werden müssen, daß ein zusätzlicher Filtrationsschritt erforderlich ist, und daß von relativ reinen Cu-(II)-Lösungen ausgegangen werden muß.

In DE 901889 wird beschrieben, daß mit Hilfe eines Reduktionsmittels, wie Schwefeldioxid, Natriumbisulfit oder Natriumsulfit, aus einer Kupfer-II-Chloridlösung, Kupfer-(I)-Chlorid in einer Ausbeute von 85-90% hergestellt werden kann. In US-A-4,758,352 wird aufgezeigt, daß bei dem in DE 901889, beschriebenen Verfahren, sich das Kupfer-(I)-Chlorid nicht quantitativ abtrennen läßt. Der Grund dafür wird in Ullmann's Encyclopedia of Industrial Chemistry, 5. Auflage, Band A7, Seite 574 aufgezeigt, in dem dargestellt ist, daß mit steigender Chloridionenkonzentration in der Lösung, die Löslichkeit von CuCl ebenfalls stark ansteigt.

Aufgabe der vorliegenden Erfindung war es, ein Verfahren bereitzustellen, durch das auf einfache Weise und in hohen Ausbeuten aus den kupferhaltigen Rückständen der Organochlorsilan-Direktsynthese CuCl hergestellt werden kann.

Gegenstand der Erfindung ist ein Verfahren zur Herstellung von CuCl aus den kupferhaltigen Rückständen der Organochlorsilan-Direktsynthese, bei dem

in einem ersten Schritt Kupfer aus einer wässrigen Suspension der kupferhaltigen Rückstande mit Mineralsäure und Oxidationsmittel, wobei Mineralsäure oder Oxidationsmittel oder Mineralsäure und Oxidationsmittel Chlor enthalten, zu $CuCl_2$ oxidiert wird, wobei eine wässrige $CuCl_2$-Lösung erhalten wird,
in einem zweiten Schritt ein Teil der wässrigen $CuCl_2$-Lösung mit einem elementaren Metall, das in der Spannungsreihe der Elemente unterhalb von Kupfer steht zu elementarem Kupfer reduziert wird und
in einem dritten Schritt das im zweiten Schritt erhaltene elementare Kupfer mit einem anderen Teil der wässrigen

CuCl$_2$-Lösung versetzt wird, wobei CuCl erhalten wird.

Das Verfahren zeichnet sich dadurch aus, daß CuCl aus relativ stark verunreinigten CuCl$_2$ Lösungen in hohen Ausbeuten und ausreichenden Reinheiten hergestellt werden kann, ohne daß die zuvor beschriebenen Nachteile zum Tragen kommen.

Die Kupfersalzlösung aus Prozeßrückständen der Organochlorsilan-, insbesondere Methylchlorsilan-Synthese erhält man, indem die kupferhaltigen Rückstände mit Mineralsäure unter Zusatz von Oxidationsmitteln, beispielsweise wie in US-A-5,306,328 beschrieben, aufgearbeitet werden.

Es handelt sich insbesondere um feste Rückstände, die vorzugsweise unter 1 Gew.-% Silane enthalten.

Vorzugsweise werden im ersten Schritt die Prozeßrückstände mit sauren Waschlösungen, die im Aufarbeitungsprozeß anfallen, suspendiert. Dann wird eine Mineralsäure, vorzugsweise Salzsäure oder Schwefelsäure, zugesetzt und mit Hilfe eines Oxidationsmittels, vorzugsweise Sauerstoff, Chlor, NaOCl oder H$_2$O$_2$, die Suspension behandelt. Mindestens eine der beiden Komponenten aus Mineralsäure und Oxidationsmittel muß Chlor oder Chlorid enthalten.

Dabei gehen alle, üblicherweise in Prozeßrückständen der Methylchlorsilan-Synthese vorkommenden Metalle und Metallsalze in Lösung, Silicium, ein Großteil der Silicide wie beispielsweise Eisendisilicid und Kohlenstoff bleiben ungelöst. Besonders bevorzugt ist die Gewinnung von Kupfer-(II)-Chlorid mit Salzsäure und Sauerstoff, der als Luftsauerstoff oder als reines Gas eingeblasen werden kann.

Vorzugsweise wird zur Abtrennung von unlöslichen Begleitstoffen, wie feine Kohlenstoffpartikel und Siliciumpartikel die Kupfersalzlösung vor der Weiterverarbeitung filtriert, wobei der Zusatz von Hilfsstoffen wie z.B. Flockungsmitteln, Anti-Schaummitteln und Filterhilfsmitteln möglich ist. Der Filterrückstand ist nach dem Waschen weitgehend frei von eluierbaren toxischen Metallverbindungen und kann entweder ordnungsgemäß deponiert werden oder als Rohstoff bzw. Zuschlagsstoff in anderen Verfahren wie. z.B. Zuschlagsstoff für mineralische Baustoffe zum Einsatz kommen. Die Waschlösungen können wieder zur Suspendierung der Prozeßrückstände eingesetzt werden.

Im zweiten Schritt wird die Kupfer-(II)-Chlorid-Lösung mit einem Metall, das in der Spannungsreihe der Elemente unterhalb des Kupfers steht, unter Rühren vorzugsweise bei pH-Werten von 0,5 bis 3 und bei einer Temperatur zwischen 10 und 90°C umgesetzt. Es bildet sich dabei in Abhängigkeit von der Art und Menge an Reduktionsmittel CuCl oder metallisches Kupfer.

Als Reduktionsmittel können beispielsweise Zink, Aluminium oder Eisen verwendet werden, bevorzugt ist Eisen, besonders bevorzugt ist Eisenpulver mit einer mittleren Korngröße im Bereich von 0,1 bis 300 µm, da durch die hohe Oberfläche die Reaktionsgeschwindigkeit erhöht ist.

Die Gesamtmenge an Reduktionsmittel richtet sich nach dem Cu-(II)-Gehalt in der Lösung und der Art des Reduktionsmittels. Das Verhältnis von Kupfer-(II)-Chlorid-Lösung zu Reduktionsmittel wird so gewählt, daß nach der Reduktion die Lösung weitgehend frei von Kupferionen und der Feststoff weitgehend frei von nicht umgesetztem Reduktionsmittel ist.

Diese Art der Reduktion wird allgemein als Zementation bezeichnet, üblicherweise wird Kupfer durch Zugabe von Eisenpulver in eine Kupfersalzlösung zementiert, es kann aber auch die in US-A-5,306,328 beschriebene inverse Zementation zum Einsatz kommen.

Der pH-Wert in der wäßrigen Suspension ist in Abhängigkeit vom eingesetzten Reduktionsmittel so einzustellen, daß sich keine Hydroxidniederschläge ausbilden können. Er liegt beim Einsatz von Eisenpulver vorzugsweise unter 2,5, bei zu kleinen pH-Werten kann die Geschwindigkeit der unerwünschten Nebenreaktion von Reduktionsmittel und Salzsäure zu Metallchlorid und Wasserstoff zu stark ansteigen. Die besten Ergebnisse erhält man, wenn der pH-Wert der Suspension 0,5 bis 2,2 beträgt. Der pH-Wert wird bevorzugt mit wässriger Salzsäure eingestellt. Die Temperatur für die Umsetzung liegt vorzugsweise im Bereich von 10 bis 90°C da dies den geringsten apparativen Aufwand erfordert.

Die wässrige, nahezu kupferfreie Lösung wird vom Kupfer abgetrennt. Ein Waschen des Kupfers ist möglich aber nicht erforderlich, und kommt in der bevorzugten Anwendungsform nicht zum Einsatz, um die Menge an wässrigen Phasen nicht zu erhöhen. Die Trennung fest/flüssig muß nicht vollständig sein, sie kann beispielsweise durch einfache Filtration oder durch einfaches Abdekandieren erfolgen.

In einer bevorzugten Ausführungsform läßt man nach der Umsetzung das Kupfer im Reaktionsgefäß durch Beendigung des Rührvorgangen absetzen und saugt die überstehende Lösung ab. Wird die Zementation mit Eisenpulver durchgeführt, enthält die wässrige Phase hauptsächlich Eisenchlorid. Derartige Lösungen können beispielsweise in Abwasser-Aufbereitungsanlagen als Flockungsmittel eingesetzt werden.

Das ausgefällte Kupfer wird nun im dritten Schritt unter rühren bei einem bevorzugten pH-Wert im Bereich von 0,5 bis 3 und einer bevorzugten Temperatur im Bereich von 10 bis 90°C mit einer CuCl$_2$-Lösung umgesetzt, die aus kupferhaltigen Rückständen der Methylchlorsilan-Synthese gewonnen wurde. Dabei fällt CuCl als kristalline Substanz aus.

Die Menge an zugesetzter CuCl$_2$-Lösung wird bevorzugt so gewählt, daß nach der Umsetzung nahezu kein

$Cu^{2+}$ in der wässrigen Phase enthalten ist, und kein metallisches Kupfer als Feststoff vorliegt.

Der pH-Wert in der Suspension ist mittels Salzsäure vorzugsweise so einzustellen, daß die Verunreinigungen, die mit der $CuCl_2$-Lösung eingebracht werden, nicht als Hydroxide ausfallen. Gleichzeitig ist in der bevorzugten Ausführungsform ein möglichst hoher pH-Wert anzustreben, um die Löslichkeit von CuCl in der wässrigen Phase möglichst gering zu halten. Die besten Ergebnisse erhält man, wenn der pH-Wert der Suspension 1,5 bis 2,8 beträgt.

Die Temperatur für die Umsetzung im dritten Schritt liegt vorzugsweise im Bereich von 10 bis 90°C, da dies den geringsten apparativen Aufwand erfordert. Besonders bevorzugt sind Temperaturen im Bereich von 30 bis 80°C.

Die Reaktion kann unter Schutzgas wie beispielsweise Stickstoff oder Argon durchgeführt werden. Der Einsatz von Schutzgas ist nicht erforderlich, wenn sichergestellt ist, daß nicht durch zu starkes Rühren laufend nennenswerte Mengen an Luftsauerstoff in die Lösung eingebracht werden.

Die wässrige Lösung der Suspension enthält, in Abhängigkeit von den gewählten Reaktionsbedingungen, noch etwa 1 bis 20 g $Cu^+$ Ionen/l. Feststoff und Lösung werden voneinander getrennt. Dies kann beispielsweise durch eine Filtration erfolgen. Das CuCl kann anschließend mit Wasser und/oder Alkohol, schwefeliger Säure, Eisessig, Ether gewaschen werden, dies ist aber nicht unbedingt erforderlich. Anschließend wird das CuCl in Abwesenheit von Luft/Sauerstoff getrocknet, wie beispielsweise unter Inertgas oder im Vakuum.

Beim erfindungsgemäßen Verfahren wird vorzugsweise, um die Cu-Verluste möglicht gering zu halten, das Filtrat aus dem dritten Schritt wieder im ersten oder zweiten Schritt eingesetzt. Eine Anreicherung von Verunreinigungen, die aus den Prozeßrückständen der Methylchlorsilan-Synthese stammen ist nicht möglich, da diese mit dem Filtrat aus dem zweiten Schritt ausgeschleust werden.

Bei der Methylchlorsilan-Synthese kann durch die Anwendung des erfindungsgemäßen Verfahrens fast das ganze, als Katalysator eingesetzte Kupfer zurückgewonnen werden, mit dem Vorteil, daß es ohne zusätzliche Verarbeitungsschritte als sehr reaktives CuCl anfällt. Der Kupferkreislauf ist weitgehend geschlossen. Geringe bei der Methychlorsilan-Synthese unvermeidliche Kupferverluste können dadurch ausgeglichen werden, daß man in die beschriebenen Kreisläufe metallisches Kupfer, Kupferverbindungen oder wässrige Kupferlösungen einschleust, wobei an die Reinheit dieser Stoffe keine hohen Anforderungen gestellt werden müssen.

In den nachfolgenden Beispielen sind, falls jeweils nicht anders angegeben,

a) alle Mengen auf die Masse bezogen;
b) alle Drücke 0,10 MPa (abs.);
c) alle Temperaturen 20°C.


**Beispiele**


**Beispiel 1: erster Schritt, Herstellung einer $CuCl_2$-Lösung aus Prozeßrückständen der Methylchlorsilan-Synthese**


400 g eines Gemisches aus Reaktorrückstand, Cyclonstaub und Trocknerstaub aus der Rohsilanfiltration wurden unter Rühren in 1000 ml Waschwasser aus einer Cu-Laugung (siehe Ende von Beispiel 1) eingebracht. Die Suspendierung erfolgte unter Stickstoff als Inertgas, da die Prozeßrückstände pyrophor sein können.

In diese Suspension wurde anschließend bei ca. 50°C mit Hilfe eines Gas-Einleitrohres Luft eingeleitet (ca. 300 l/h), durch eine kontinuierliche Zugabe von 20%iger Salzsäure wurde der pH in der Suspension im Bereich von 1 bis 3 gehalten. Nach 5 Stunden Laugungszeit wurde mit 20 %iger Salzsäure ein pH von 1,7 eingestellt, die Lösung filtriert und der feste Rückstand mit 1000 ml Wasser gewaschen.

Ein Eluatversuch am feuchten Rückstand nach DIN 38414 ergab 0,008 g/l eluierbares Kupfer (Zweite allgemeine VwV zum Abfallgesetz - Anhang D; Grenzwert für Cu: max 10 mg/l).

Im Filtrat wurden folgende Konzentrationen gemessen:

| | |
|---|---|
| Kupfer | 61,5 g/l |
| Aluminium | 3,9 g/l |
| Calcium | 0,6 g/l |
| Eisen | 2,0 g/l |
| Magnesium | 0,3 g/l. |

Normiert auf die gleiche Cu-Konzentration konnten vergleichsweise in einer "Abfallsäure" aus einer Leiterplattenherstellung folgende Konzentration gemessen werden:

| Aluminium | 0,007 g/l |
|-----------|-----------|
| Calcium | 0,002 g/l |
| Eisen | 0,016 g/l. |

**Beispiel 2: zweiter und dritter Schritt, Herstellung von CuCl über Kupfermetall als Zwischenstufe**

In einem Rührgefäß wurden 1000 ml Filtrat aus der CuCl-Herstellung (siehe Ende von Beispiel 2) und 80 g Eisenpulver mit einer mittleren Teilchengröße von 60 bis 70 um vorgelegt und auf 50°C erwärmt. Innerhalb von 30 Minuten wurden, 1000 ml einer nach Beispiel 1 hergestellten Kupfer-(II)-Chlorid-Lösung, mit einem Kupfergehalt von 54 g/l, zugesetzt. Anschließend wurde 60 Minuten lang nachgerührt, auf Raumtemperatur abgekühlt und mittels 20%iger Salzsäure ein pH von 1,6 eingestellt. Nach dem Abschalten der Rührung setzte sich das metallische Kupfer rasch ab, die überstehende klare Eisenchlorid-Lösung wurde mit Hilfe einer Wasserstrahlpumpe durch eine Glasfritte abgesaugt. Zu dem im Rührgefäß verbliebenen metallischem Kupfer und der Restmenge an Eisenchlorid-Lösung, wurden unter Stickstoff als Schutzgas, innerhalb von 15 Minuten bei 50°C, 1125 ml einer Kupfer-(II)-Chlorid-Lösung (hergestellt nach Beispiel 1, mit 54 g/l Kupfer) zugegeben. Anschließend wurde 60 Minuten lang nachgerührt, auf Raumtemperatur abgekühlt und mittels 20%iger Salzsäure ein pH von 1,9 eingestellt. Die Abtrennung des gebildeten, festen CuCl erfolgte über eine Nutsche unter Stickstoff als Schutzgas. Nach Waschen mit 150 ml Wasser und Trockensaugen erfolgte die Trockung des CuCl im Vakuum bei 80°C.

In der Eisenchlorid-Lösung wurde eine Gesamtkupfer-Konzentration von kleiner 0,05 g/l gemessen, im Filtrat aus der CuCl-Herstellung wurde eine Gesamtkupfer-Konzentration von 10 g/l gemessen.

Am CuCl wurden folgende elementaranalytische Daten ermittelt:

| Kupfer | 63,8% |
|--------|-------|
| Aluminium | 0,05% |
| Calcium | 0,01% |
| Eisen | 0,15% |
| Magnesium | 0,01%. |

**Beispiele 3 - 6: Methylchlorsilan-Synthese mit Kupferkatalysatoren**

Versuchsanlage:

Labor-Wirbelschichtreaktor (senkrechtes Glasrohr mit einem Innendurchmesser von 25 mm und einer Höhe von 500 mm) mit Heizwicklung, Gasverteilerfritte, Destillationsbrücke mit Solekühlung und Vorlagekolben.

Standardisierte Vorgehensweise:

[A] g Kupferkatalysator, 1g Zinkoxid, 8 mg Zinnpulver und 120g Siliciumpulver in der Korngröße 70 - 250μm wurden innig durchmischt und in den Reaktor gefüllt und unter einem Stickstoffstrom von 40 l/h auf 340°C erwärmt. Anschließend wurden 40 l/h Chlormethan durch den Reaktor geleitet und die Kontaktmasse auf 395°C erwärmt. Nach einer Induktionszeit beginnt die Silanbildung, die Reaktionstemperatur wird auf 360°C reduziert und 50 ml Methylchlorsilane werden aufgefangen (Startphase). Anschließend werden weitere 30 ml Methylchlorsilane gesammelt. Die Zeit zur Bildung dieser 30 ml Silane wird als Produktionsphase bezeichnet, die Produktionsrate (PR2) errechnet sich nach der Formel

$$PR2 = \frac{\text{mg Methylchlorsilane in der Produktionsphase}}{\text{Oberfläche des Siliciums x Minuten in der Produktionsphase}}$$

Die Silanzusammensetzung der 30 ml Methylchlorsilane wurde mittels GC-Analyse in Gewichtsprozent ermittelt.

| Beispiel | Cu-Katalysator | Induktionszeit | PR2 | Dimethyldichlorsilan |
|----------|----------------|----------------|-----|----------------------|
| 3 | 6,0g CuO | 27 Minuten | 58 | 84,9% |
| 4 | 7,3g CuCl | 4 Minuten | 118 | 86,3% |

(fortgesetzt)

| Beispiel | Cu-Katalysator | Induktionszeit | PR2 | Dimethyldichlorsilan |
|---|---|---|---|---|
| 5 | 4,0g CuCl | 3 Minuten | 67 | 85,6% |
| 6 | 3,0g CuCl | 4 Minuten | 55 | 84,9% |

Der CuO-Katalysator aus Beispiel 3 wurde nach dem in US-A-5,306,328, Beispiel 5 beschriebenen Verfahren hergestellt. Bezogen auf den Cu-Gehalt, entsprechen 6,0g CuO 7,3 g CuCl-Katalysator.

Mit den Beispielen 3-6 wird der Nachweis geliefert, daß

a) die Induktionszeit bei den erfindungsgemäß hergestellten Katalysatoren kürzer ist als bei den nach US-A-5,306,328 hergestellten Katalysatoren;
b) bei gleicher Kupferkatalysatormenge, bezogen auf metallisches Kupfer, CuCl eine höhere Reaktivität liefert;
c) bei vergleichbaren Reaktivitätswerten ein, im Vergleich zum CuO, geringerer Cu-Katalysatorbedarf erforderlich ist.

**Patentansprüche**

1.  Verfahren zur Herstellung von CuCl aus den kupferhaltigen Rückständen der Organochlorsilan-Direktsynthese, bei dem

    in einem ersten Schritt Kupfer aus einer wässrigen Suspension der kupferhaltigen Rückstände mit Mineralsäure und Oxidationsmittel, wobei Mineralsäure oder Oxidationsmittel oder Mineralsäure und Oxidationsmittel Chlor enthalten, zu $CuCl_2$ oxidiert wird, wobei eine wässrige $CuCl_2$-Lösung erhalten wird,
    in einem zweiten Schritt ein Teil der wässrigen $CuCl_2$-Lösung mit einem elementaren Metall, das in der Spannungsreihe der Elemente unterhalb von Kupfer steht zu elementarem Kupfer reduziert wird und
    in einem dritten Schritt das im zweiten Schritt erhaltene elementare Kupfer mit einem anderen Teil der wässrigen $CuCl_2$-Lösung versetzt wird, wobei CuCl erhalten wird.

2.  Verfahren nach Anspruch 1, wobei die im ersten Schritt eingesetzte Mineralsäure Salzsäure oder Schwefelsäure, ist.

3.  Verfahren nach Anspruch 1 oder 2, wobei das im ersten Schritt eingesetzte Oxidationsmittel aus Sauerstoff, Chlor, NaOCl und $H_2O_2$ ausgewählt wird.

4.  Verfahren nach Anspruch 1 bis 3, bei dem das im zweiten Schritt eingesetzte elementare Metall aus Zink, Aluminium und Eisen ausgewählt wird.

**Claims**

1.  Process for the preparation of CuCl from the copper-containing residues of the direct organochlorosilane synthesis, in which

    in a first step, copper from an aqueous suspension of the copper-containing residues is oxidized with mineral acid and oxidizing agent, mineral acid or oxidizing agent or mineral acid and oxidizing agent containing chlorine, to give $CuCl_2$, an aqueous $CuCl_2$ solution being obtained,
    in a second step, some of the aqueous $CuCl_2$ solution is reduced with an elemental metal, which is below copper in the electrochemical series of the elements, to give elemental copper and
    in a third step, the elemental copper obtained in the second step is mixed with another part of the aqueous $CuCl_2$ solution, CuCl being obtained.

2.  Process according to Claim 1, the mineral acid used in the first step being hydrochloric acid or sulphuric acid.

3.  Process according to Claim 1 or 2, the oxidizing agent used in the first step being selected from oxygen, chlorine,

NaOCl and $H_2O_2$.

4. Process according to any of Claims 1 to 3, in which the elemental metal used in the second step is selected from zinc, aluminium and iron.

**Revendications**

1. Procédé de préparation de CuCl à partir des résidus contenant du cuivre de la synthèse directe d'organochlorosilanes, dans lequel

dans une première étape, le cuivre provenant d'une suspension aqueuse des résidus contenant du cuivre est oxydé avec un acide minéral et un oxydant, où l'acide minéral ou l'oxydant ou l'acide et l'oxydant renferment du chlore, pour donner lieu au $CuCl_2$, en obtenant une solution aqueuse de $CuCl_2$,
dans une deuxième étape, une partie de la solution aqueuse de $CuCl_2$ est réduite avec un métal élémentaire qui se trouve en dessous du cuivre dans la classification électrochimique des éléments, pour donner du cuivre élémentaire et
dans une troisième étape, le cuivre élémentaire obtenu dans la deuxième étape est mélangé avec une autre partie de la solution aqueuse de $CuCl_2$, en obtenant du CuCl.

2. Procédé selon la revendication 1, dans lequel l'acide minéral utilisé dans la première étape est l'acide chlorhydrique ou l'acide sulfurique.

3. Procédé selon la revendication 1 ou 2, dans lequel l'oxydant utilisé dans la première étape est choisi parmi l'oxygène, le chlore, le NaOCl et le $H_2O_2$.

4. Procédé selon les revendications 1 à 3, dans lequel le métal élémentaire utilisé dans la deuxième étape est choisi parmi le zinc, l'aluminium et le fer.